Europäisches Patentamt

European Patent Office

Office européen des brevets

(19)

(11) Publication number: **0 225 793 B1**

# EUROPEAN PATENT SPECIFICATION

(12)

(45) Date of publication of patent specification :
06.02.91 Bulletin 91/06

(51) Int. Cl.[5] : **B01J 47/04**

(21) Application number : **86309492.6**

(22) Date of filing : **05.12.86**

(54) **Use of ion exchange resin mixtures in cation exchange processes.**

(30) Priority : **09.12.85 GB 8530275**

(43) Date of publication of application :
**16.06.87 Bulletin 87/25**

(45) Publication of the grant of the patent :
**06.02.91 Bulletin 91/06**

(84) Designated Contracting States :
**AT BE CH DE ES FR GB IT LI NL SE**

(56) References cited :
**DE-A- 3 248 126**
**GB-A- 670 350**
**US-A- 2 962 438**
**US-A- 3 250 702**
**US-A- 4 252 905**

(73) Proprietor : **ROHM AND HAAS COMPANY**
**Independence Mall West**
**Philadelphia Pennsylvania 19105 (US)**

(72) Inventor : **Prunac, Alain Denis Louis**
**92 Rue de Cornouailles**
**F-78180 Montigny-Le-Bretonneux (FR)**
Inventor : **Baur, Daniel Michel**
**487 Chemin des Pertuades**
**06220 Golfe Juan (FR)**
Inventor : **Poirson, Jean Pierre Marcel**
**Clos de Mougins 107/2 Impasse Des Chenes**
**F-06250 Mougins (FR)**

(74) Representative : **Angell, David Whilton**
**ROHM AND HAAS (UK) LTD. European**
**Operations Patent Department Lennig House**
**2 Mason's Avenue**
**Croydon CR9 3NB (GB)**

EP 0 225 793 B1

## Description

The present invention is concerned with the use of ion exchange resin mixtures in cation exchange processes, such as food processing and/or potable water production, so that organic material leached from the resin mixture during such processes is maintained at an acceptable level in the treated liquid. For example, these resin mixtures enable the production of softened water having a level of leached organic material which is low enough for the water to be acceptable for potable water applications. By "food processing" we mean cation exchange processes used in the treatment of liquids for use in the production or processing of materials for human consumption.

It is known to soften water, i.e. to remove primarily calcium and magnesium hardness ions from the water, by passing the water through cation exchange resin but this procedure is not always acceptable for the production of potable water as organic material can leach from the resin into the water during treatment and result in too high a level of leached organic material in the softened water for potability. At present, the recommendation in some countries is that resin will be acceptable for the production of potable water if the level of organic material leaching from the resin is not more than 3 mg/litre of water, expressed as total organic carbon and measured by the procedure of DIN Standard 54411.

It is, therefore, clearly desirable, during softening of water with cation exchange resin, to maintain a level of this leached organic material such that the softened water is potable.

It is known to deionize water by passing it sequentially through cation exchange resin and then anion exchange resin, the volume ratio of anion exchange resin to cation exchange resin usually being of the order of 1 : 1. During such deionization it has been observed that organic material leaching into the water from the cation exchange resin is absorbed by the anion exchange resin and it might be expected that effective absorption of leached organic material will also occur using somewhat less anion exchange resin in a sequential treatment.

US-A-3 250 702 discloses a mixed ion exchange resin bed useful for the purification of liquids, especially the purification of condensate water from a steam generating system. The ion exchange resin bed comprises a mixture of finely divided anion and cation exchange resins with the cation exchange resin being present in an amount of 5 to 95% by weight of the mixture. No mention is made as to the control of the level of leached organic material.

What we have now surprisingly found is that softened water having a leached organic material level low enough for potability can be produced by passing the water through a resin mixture comprising (a) cation exchange resin and (b) only 0.5 to 20% by volume, of (a) plus (b), of anion exchange resin. The effectiveness of such a resin mixture is surprising in view of the lower degree of contact of any leached organic material with such a low amount of anion exchange resin dispersed throughout the cation exchange resin as opposed to a similar amount in a sequential treatment. The use of a single resin bed, of course, has the inherent advantages over the use of separate beds, for example, simplification of transportation and storage of resin, simplification of the equipment required for the softening process, and the economic advantages associated therewith.

According to the present invention there is provided a process for treating a liquid, e.g. water, to remove cations, for example hardness ions, therefrom, comprising passing the liquid to be treated through a bed of ion exchange ion exchange resin, characterized in that the resin comprises a mixture of:

(a) cation exchange resin ; and

(b) acrylic and/or styrenic anion exchange resin ; resin (b) being present in an amount of 0.5% to 20% by volume, based on the total volume of (a) plus (b), and the level of organic material leached from the resin mixture into the treated liquid is maintained at a level which is acceptable under the relevant legislation for potable water production and/or food processing, for example, by using a resin mixture having a leachable organic material level, expressed as total organic carbon and measured by the procedure of DIN Standard 54411, of not more than 3 mg/litre of liquid.

Examples of suitable applications of the process of the present invention are in the treatment of water to produce softened, potable water, and in sugar processing, for example, to remove hardness ions or monovalent cations from sugar syrup.

Resin (a) may comprise strongly and/or weakly acidic cation exchange resin. Further, resin (a) may comprise gel-type and/or macroreticular (otherwise known as macroporous) -type acidic cation exchange resin. The exchangeable cations of strongly acidic cation exchange resins are preferably alkali and/or alkaline earth metal cations, and the exchangeable cations of weakly acidic cation exchange resins are preferably $H^+$ and/or alkali metal cations.

Suitable strongly acidic cation exchange resins include styrene/divinyl benzene cation exchange resins, for example, styrene/divinyl benzene resins having sulfonic functionality and being in the $Na^+$ form such as Amberlite 200, Amberlite 252 and Duolite C26, which are macroreticular-type resins, and Amberlite IR-120, Amberlite IR-122, Amberlite IR-132, Duolite C20 and Duolite C206, which are gel-type resins. Suitable weakly acidic cation exchange resins include acrylic cation exchange resins, for example, Amberlite XE-501, which is a macroreticular-type acrylic cation exchange resin having carboxylic functionality and being in the H+ form, and Amberlite DP1 which is a macroreticular-type methacrylic/divinyl benzene resin having carboxylic functionality and being in the Na+ form.

Resin (b) may comprise strongly and/or weakly basic anion exchange resin. Further, resin (b) may comprise gel-type and/or macroreticular-type basic anion exchange resin. If resin (b) comprises styrenic anion exchange resin, then such styrenic resin is preferably macroreticular. Preferably, the exchangeable anions of resin (b) are chloride and/or sulfate ions. Suitable strong base anion exchange resins include those having quaternary ammonium functionality such as the following all of which are in the chloride form : Amberlite IRA-458, which is a gel-type acrylic resin having trimethyl ammonium functionality ; Amberlite IRA-900 which is a macroreticular-type styrene/divinylbenzene resin having trimethylammonium functionality ; Amberlite IRA-400, which is a gel-type styrene/divinylbenzene resin having trimethyl ammonium functionality ; and Duolite ES-196 which is a macroreticular styrene/divinylbenzene resin having triethylammonium functionality. Suitable weak base anion exchange resins include Amberlite IRA-93 which is a macroreticular styrene/divinylbenzene resin in the free base form.

Before use of the anion exchange resin in accordance with the present invention it may be cleaned, for example by washing it with hot water, to remove any organic material that is present and that may otherwise leach out of it during such use.

The lower limit for the amount of resin (b) in the resin mixture of the invention is preferably 2%, more preferably 3% and most preferably 4%, by volume, based on the total volume of resins (a) plus (b). The upper limit for the amount of resin (b) in the resin mixture of the invention is preferably 15%, more preferably 10% and most preferably 6%, by volume, based on the total volume of resins (a) plus (b).

The resin mixture may, for example, additionally comprise, as bio-filter, ion exchange resin which has been impregnated or coated with silver. The bio-filter resin may, for example, comprise silver-containing strongly basic anion exchange resin and/or silver-containing strongly acidic cation exchange resin. Suitable silver-containing strongly basic anion exchange resins include styrene/divinyl benzene resins, for example, silver-containing macroreticular-type styrene/divinyl benzene resins which have trimethyl ammonium functionality and are in the chloride form such as Ambergard XE 342. Suitable silver-containing strongly acidic cation exchange resins include Duolite C 26 AG which is a silver-containing macroreticular styrene/divinylbenzene resin having sulfonic functionality and in the Na+ form.

The process according to the present invention enables the production of treated liquid, for example, softened water, having a level of organic material which is considerably lower than that achieved by the use of a strongly acidic cation exchange resin alone, this lower level of organic material being achieved by the take-up, by the acrylic and/or styrenic anion exchange resin, of organic material that may leach into the liquid from the acidic cation exchange resin.

The present invention will now be further illustrated by way of the following Examples which are for illustrative purposes only and are not to be construed as imposing any limitation on the scope of the invention.

EXAMPLE 1 :

400 ml of a 95% by volume Amberlite IR-120 and 5% by volume Amberlite IRA-458 resin mixture were placed in a 40 millimetre internal diameter glass column and rinsed upwardly over a period of 2 hours with two litres of deionized water.

The resin-containing column was then connected, via a pump, to a glass reservoir containing 4 litres of deionized water having an initial Total Organic Carbon content (TOC), as measured by a commercial TOC analyser, of 0.4 mg/l of water. The water from the reservoir was then percolated downwardly through the resin mixture at a flow rate of 5.7 1/hour and returned to the reservoir (this procedure being continued for a period of 7 days).

At the end of this procedure, the TOC of the water in the reservoir had increased by only 2.5 mg/l of water, which is below the maximum amount of leached organic material tolerated, under the present West German Regulations, for food processing and potable water utilization.

The above test procedure corresponds to the BGA Recommendation XXIV, and the complete testing procedure and equipment are those of the DIN Standard 54411.

COMPARATIVE EXAMPLE A :

Example 1 was repeated except that Amberlite IR-120 was used alone in the column.

After percolation of the water through the resin-containing column for a period of 7 days, it was found that the TOC of the water had increased by 3.5 mg/l, 3 mg/l being the presently recommended maximum limit under the present West German regulations.

EXAMPLE 2 :

Example 1 was repeated except that the Amberlite IR-120 was replaced by Amberlite XE-501. In this Example the increase in the TOC of the water, after percolation through the resin mixture for 7 days, was observed to be 1.3 mg/l of water.

COMPARATIVE EXAMPLE B :

Example 2 was repeated except that Amberlite XE-501 was used alone in the column. After percolation of the water through the resin for 7 days, it was observed that the TOC of the water had increased by 6 mg/l of water when compared with the initial TOC of the water.

Example 3 :

Example 1 was repeated except that the Amberlite IRA-458 in the resin mixture was replaced with Amberlite IRA-93 which is a weakly basic macroreticular styrenic anion exchange resin.

After percolation of the water through the resin-containing column for a period of 7 days, it was found that the TOC of the water had increased by only 1.1 mg/l of water.

Example 4 :

Example 1 was repeated except that the Amberlite IRA-458 was replaced with Amberlite IRA-400 which is a strongly basic gel-type styrenic anion exchange resin.

After percolation of the water through the resin-containing column for a period of 7 days, it was found that the TOC of the water had increased by only 2.4 mg/l of water.

Example 5 :

Example 4 was repeated except that a 98% by volume Amberlite IR-120 and 2% by volume Amberlite IRA-400 resin mixture was used.

After percolation of the water through the resin-containing column for a period of 7 days, it was found that the TOC of the water had increased by 3.3 mg/l of water, which, although being a greater increase in TOC than when the resin mixture contained 5% by volume Amberlite IRA-400 (Example 4), is still lower than the increase in TOC achieved when Amberlite IR-120 is used alone (Comparative Example A).

Example 6 :

Example 1 was repeated except that the Amberlite IR-120 was replaced by Amberlite IR-252.

After percolation of the water through the resin-containing column for a period of 7 days, it was found that the TOC of the water had increased by only 0.8 mg/l of water.

Example 7 :

Example 6 was repeated except that the Amberlite IRA-458 was replaced by Amberlite IRA-900.

After percolation of the water through the resin-containing column for 7 days, it was found that the TOC of the water had increased by only 1.5 mg/l of water.

Example 8 :

An ion exchange resin mixture of 14.3 litres of Amberlite IR-120 and 0.7 litres of Amberlite IRA-458 was placed in the ion exchange resin container of a standard water softening apparatus for domestic usage. Water having a total hardness of 378 mg/l, as calcium carbonate, was fed to the softener at a flow rate of 225 litre per hour and after 30 minutes of operation the TOC and total hardness (as calcium carbonate) in the treated water at the outlet of the softener were 0.4 mg/l and less than 1 mg/l, respectively. After 60 minutes of operation the TOC and total hardness (as calcium carbonate) at the outlet of the softener were less than 0.1 mg/l and less than 1 mg/l, respectively.

COMPARATIVE EXAMPLE C :

Example 8 was repeated except that 15 litres of Amberlite IR 120 was used alone in the ion exchange resin container of the softener.

After 30 minutes of operation the TOC and total hardness (as calcium carbonate) of the water at the outlet of the softener were 1.6 mg/l and less than 1 mg/l, respectively, and after 60 minutes of operation the TOC and total hardness (as calcium carbonate) of the water at the outlet of the softener were 0.9 mg/l and less than 1 mg/l, respectively.

The above Examples show the effectiveness of the anion exchange resin in (i) maintaining the leached organic material level of the cation exchange resin acceptably low both when treated using the procedure of DIN Standard 54411 (see Examples 1 to 4, 6 and 7 and Comparative Examples A and B) and under actual use conditions (see Example 8 and Comparative Example C), (ii) maintaining the level of leached organic material lower than when cation exchange resin is used alone (see Examples 1 to 8 and Comparative Examples A, B and C).

"Amberlite" and "Ambergard" are Trade Marks of Rohm and Haas Company, and "Duolite" is a Trade Mark of Duolite International S.A.

**Claims**

1. A process for treating a liquid, e.g. water, to remove cations therefrom, comprising passing the liquid to be treated through a bed of ion exchange resin, characterised in that the resin comprises a mixture of :

(a) cation exchange resin ; and

(b) acrylic and/or styrenic anion exchange resin ; resin (b) being present in an amount of 0.5% to 20% by volume, based on the total volume of (a) plus (b), and the level of organic material leached from the resin mixture into the treated liquid is maintained at a level which is acceptable under the relevant legislation for potable water production and/or food processing.

2. A process for treating a liquid according to claim 1, wherein resin (b) is present in an amount of 0.5 to 15% by volume, based on the total volume of (a) plus (b).

3. A process for treating a liquid according to claim 2, wherein resin (b) is present in an amount of 3 to 10%, especially 4 to 6%, by volume, based on the total volume of (a) plus (b).

4. A process for treating a liquid according to any preceding claim, wherein resin (a) comprises strongly acidic cation exchange resin in which the exchangeable cations are alkali metal and/or alkaline earth metal cations, and/or weakly acidic cation exchange resin in which the exchangeable cations are $H^+$ and/or alkali metal cations.

5. A process for treating a liquid according to claim 4, wherein the strongly acidic cation exchange resin comprises styrene/divinylbenzene resin having sulfonic functionality and being in the $Na^+$ form.

6. A process for treating a liquid according to claim 4, wherein the weakly acidic cation exchange resin comprises acrylic cation exchange resin having carboxyl functionality and being in the $H^+$ or $Na^+$ form.

7. A process for treating a liquid according to any preceding claim, wherein (b) comprises strong base anion exchange resin having quaternary ammonium functionality and being in the chloride form.

8. A process for treating a liquid according to any preceding claim, which also comprises, as bio-filter, ion exchange resin which has been impregnated with silver.

9. A process for treating a liquid according to any preceding claim, wherein the level of organic material leached from the resin mixture into the treated liquid is maintained at not more than 3 mg/l of liquid.

10. Use of a bed of ion exchange resin for treating potable water to remove cations from the water, wherein the ion exchange resin comprises a mixture of :

(a) cation exchange resin ; and

(b) acrylic and/or styrenic anion exchange resin ; resin (b) being present in an amount of 0.5% to 20% by volume, based on the total volume of (a) plus (b), and the level of organic material leached from the resin mixture into the treated liquid is maintained at an acceptable level.

## Ansprüche

1. Verfahren zur Behandlung einer Flüssigkeit, beispielsweise Wasser, zur Entfernung von Kationen durch Durchschicken der zu behandelnden Flüssigkeit durch ein Bett aus einem Ionenaustauscherharz, dadurch **gekennzeichnet** , daß das Harz eine Mischung aus

(a) einem Kationenaustauscherharz und

(b) einem Acryl- und/oder Styrol-Anionenaustauscherharz ist,

wobei das Harz (b) in einer Menge von 0,5 bis 20 Vol.-%, bezogen auf das Gesamtvolumen von (a) plus (b) vorliegt, und der Gehalt des organischen Materials, das aus der Harzmischung in die behandelte Flüssigkeit ausgelaugt wird, auf einem Wert gehalten wird, der unter Berücksichtigung der Gesetzgebung für Trinkwassererzeugung und/oder Nahrungsmittelverarbeitung annehmbar ist.

2. Verfahren zur Behandlung einer Flüssigkeit gemäß Anspruch 1, wobei das Harz (b) in einer Menge von 0,5 bis 15 Vol.-%, bezogen auf das gesamte Volumen von (a) plus (b) vorliegt.

3. Verfahren zur Behandlung einer Flüssigkeit gemäß anspruch 2, wobei das Harz (b) in einer Menge von 3 bis 10 Vol.-%, insbesondere 4 bis 6 Vol.-%, bezogen auf das Gesamtvolumen von (a) plus (b), vorliegt.

4. Verfahren zur Behandlung einer Flüssigkeit gemäß einem der vorhergehenden Ansprüche, wobei das Harz (a) ein stark saures Kationenaustauscherharz ist, in welchem die austauschbaren Kationen Alkalimetall- und/oder Erdalkalimetallkationen sind und/oder ein schwach saures Kationenaustauscherharz ist, in welchem die austauschbaren Kationen $H^+$ und/oder Alkalimetallkationen sind.

5. Verfahren zur Behandlung einer Flüssigkeit gemäß Anspruch 4, wobei das stark saure Kationenaustauscherharz ein Styrol/Divinylbenzol-Harz mit einer Sulfonfunktionalität ist, das in der $Na^+$-Form vorliegt.

6. Verfahren zur Behandlung einer Flüssigkeit gemäß Anspruch 4, wobei das schwach saure Kationenaustauscherharz aus einem acrylkationenaustauscherharz mit einer Carboxylfunktionalität besteht, das in der $H^+$ - oder $Na^+$-Form vorliegt.

7. Verfahren zur Behandlung einer Flüssigkeit gemäß einem der vorhergehenden Ansprüche, wobei (b) ein starkbasisches Anionenaustauscherharz ist, das eine quaternäre Ammoniumfunktionalität besitzt und in der Chloridform vorliegt.

8. Verfahren zur Behandlung einer Flüssigkeit gemäß einem der vorhergehenden Ansprüche, welches als Biofilter ein Ionenaustauscherharz vorsieht, das mit Silber imprägniert worden ist.

9. Verfahren zur Behandlung einer Flüssigkeit gemäß einem der vorhergehenden Ansprüche, wobei der Gehalt an organischem Material, das aus der Harzmischung in die behandelte Flüssigkeit ausgelaugt wird, bei nicht mehr als 3 mg/l der Flüssigkeit gehalten wird.

10. Verwendung eines Bettes aus einem lonenaustauscherharz zur Behandlung von Trinkwasser zur Entfernung von Kationen aus dem Wasser, wobei das Ionenaustauscherharz aus einer Mischung aus

    (a) einem Kationenaustauscherharz und

    (b) einem acryl- und/oder Styrol-Anionenaustauscherharz besteht,

wobei das Harz (b) in einer Menge von 0,5 bis 20 Vol.-%, bezogen auf das gesamte Volumen von (a) + (b), vorliegt, und die Menge an organischem Material, die aus der Harzmischung in die behandelnde Flüssigkeit ausgeleitet wird, auf einem annehmbaren Wert gehalten wird.

**Revendications**

1. Procédé pour traiter un liquide, par exemple l'eau, pour en extraire les cations, comprenant le passage du liquide à traiter à travers un lit de résine échangeuse d'ions, caractérisé en ce que la résine comprend un mélange de

    (a) résine échangeuse de cations ; et

    (b) résine échangeuse d'anions, acrylique et/ou styrénique ;

la résine (b) étant présente en une quantité de 0,5 à 20% en volume par rapport au volume total de (a) et de (b), et la quantité de matériau organique extraite du mélange de résines par lixiviation et entrant dans le liquide traité étant maintenue à une valeur acceptable compte tenu de la législation en vigueur concernant la production de l'eau potable et/ou la transformation des produits alimentaires.

2. Procédé pour traiter un liquide selon la revendication 1, dans lequel la résine (b) est présente en une quantité de 0,5 à 15% en volume, par rapport au volume total de (a) et de (b).

3. Procédé pour traiter un liquide selon la revendication 2, dans lequel la résine (b) est présente en une quantité de 3 à 10% en volume, en particulier de 4 à 6% en volume par rapport au volume total de (a) et de (b).

4. Procédé pour traiter un liquide selon l'une quelconque des revendications précédentes, dans lequel la résine (a) comprend une résine échangeuse de cations fortement acide, dans laquelle les cations échangeables sont des cations de métaux alcalins et/ou de métaux alcalino-terreux, et/ou une résine échangeuse de cations faiblement acide, dans laquelle les cations échangeables sont des cations $H^+$ et/ou de métaux alcalins.

5. Procédé pour traiter un liquide selon la revendication 4, dans lequel la résine échangeuse de cations fortement acide comprend une résine de styrène/divinylbenzène présentant une fonctionnalité sulfonique et se présentant sous la forme $Na^+$.

6. Procédé pour traiter un liquide selon la revendication 4, dans lequel la résine échangeuse de cations faiblement acide comprend une résine échangeuse de cations acrylique, ayant une fonctionnalité carboxyle et se présentant sous la forme $H^+$ ou $Na^+$.

7. Procédé pour traiter un liquide selon l'une quelconque des revendications précédentes, dans lequel (b) comprend une résine échangeuse d'anions fortement basique, ayant une fonctionnalité ammonium quaternaire et se présentant sous la forme chlorure.

8. Procédé pour traiter un liquide selon l'une quelconque des revendications précédentes, qui comprend aussi, en tant que biofiltre, une résine échangeuse d'ions qui a été imprégnée d'argent.

9. Procédé pour traiter un liquide selon l'une quelconque des revendications précédentes, dans lequel la quantité de matériau organique extrait du mélange de résine par lixiviation et entrant dans le liquide traité est maintenue à une valeur non supérieure à 3 mg/l de liquide.

10. Utilisation d'un lit d résine échangeuse d'ions pour traiter de l'eau potable pour éliminer des cations de l'eau, dans laquelle la résine échangeuse d'ions comprend un mélange de :

    (a) résine échangeuse de cations ; et

    (b) résine échangeuse d'anions, acrylique et/ou styrénique ;

la résine (b) étant présente en une quantité de 0,5 à 20% en volume par rapport au volume total de (a) et de (b), et la quantité de matériau organique extraite du mélange de résines par lixiviation et entrant dans le liquide traité étant maintenue à une valeur acceptable.